(19) Europäisches Patentamt
European Patent Office
Office européen des brevets

(11) Numéro de publication: **0 021 498**
**B1**

(12) **FASCICULE DE BREVET EUROPEEN**

(45) Date de publication du fascicule du brevet: **20.07.83**

(21) Numéro de dépôt: **80200534.8**

(22) Date de dépôt: **10.06.80**

(51) Int. Cl.³: **C 01 B 15/055**, C 01 B 15/08, C 01 B 15/10, C 01 B 15/14, C 01 B 15/16

(54) **Particules de composés peroxygénés stabilisés, procédé pour leur fabrication, et composition en contenant.**

(30) Priorité: **21.06.79 FR 7916344**

(43) Date de publication de la demande: **07.01.81 Bulletin 81/1**

(45) Mention de la délivrance du brevet: **20.07.83 Bulletin 83/29**

(84) Etats contractants désignés: **AT BE CH DE FR GB IT LI LU NL SE**

(56) Documents cités:

**DE-A-2 622 610**
**DE-A-2 723 563**
**DE-B-1 028 545**
**DE-B-1 240 508**
**FR-A-2 169 273**
**FR-A-2 215 385**
**FR-A-2 255 255**
**FR-A-2 386 477**

**Le dossier contient des informations techniques présentées postérieurement au dépôt de la demande et ne figurant pas dans le présent fascicule.**

(73) Titulaire: **INTEROX Société anonyme dite:, Rue du Prince Albert, 33, B-1050 Bruxelles (BE)**

(72) Inventeur: **Brichard, Jean, Eikendallaan, 5, B-1800 Vilvoorde (BE)**
Inventeur: **Colery, Jean-Claude, Avenue du Heymbosch, 121, B-1090 Bruxelles (BE)**
Inventeur: **Sarot, Pierre, Avenue Opperveld, 38, B-1800 Vilvoorde (BE)**

(74) Mandataire: **Meyers, Liliane et al, Solvay & Cie Département de la propriété industrielle 310, rue de Ransbeek, B-1120 Bruxelles (BE)**

EP 0 021 498 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

# Particules de composés peroxygénés stabilisés, procédé pour leur fabbrication, et composition en contenant

La présente invention concerne des particules de composés peroxygénés stabilisés, un procédé pour leur fabrication, ainsi que des compositions à action de blanchiment contenant ces particules.

Il est bien connu que certains composés peroxygénés peuvent être employés comme agents de blanchiment dans les mélanges détergents en poudre. Dans les poudres détergentes domestiques usuelles, on emploie habituellement du perborate de sodium tétrahydraté comme composé de blanchiment parce qu'il est relativement stable à la décomposition dans un milieu détergent. Cependant, il devient de plus en plus courant d'utiliser des techniques de lavage et de trempage à froid du linge pour lesquelles le perborate de sodium présente l'inconvénient de se dissoudre trop lentement à 20°C. Pour remédier à cet inconvénient, il a été proposé d'introduire dans les poudres détergentes d'autres composés peroxygénés minéraux, notamment les percarbonates, les perphosphates et les peroxymonosulfates de métaux alcalins, qui ont des vitesses de dissolution appropriées.

De nombreux procédés ont été proposés jusqu'à présent pour fabriquer des particules de ces composés peroxygénés mais, dans la plupart des cas, les particules obtenues présentent une résistance à l'attrition, une stabilité au stockage en atmosphère humide ou une stabilité vis-à-vis des autres constituants des poudres détergentes insuffisantes. Un procédé intéressant de fabrication de particules de percarbonate de sodium permettant de pallier certains des inconvénients mentionnés ci-dessus, consiste à introduire, dans un lit fluide contenant des germes de dimensions inférieures à celles des particules que l'on désire obtenir, une solution de peroxyde d'hydrogène et une solution de carbonate de sodium (brevet français 70.01315 déposé le 14 janvier 1970 au nom de SOLVAY & Cie, publié sous le n° 2 076 430). Ce procédé permet l'obtention de particules beaucoup plus résistantes à l'abrasion que celles obtenues par d'autres procédés.

Par ailleurs, pour améliorer la stabilité des particules de composés peroxygénés, on a par ailleurs proposé (brevet français 76.15716 déposé le 20 mai 1976 au nom de la Demanderesse et publié sous le n° 2 324 574) de les enrober au moyen d'enrobants solides contenant du carbonate de sodium en mélange avec du silicate de sodium et soit du sulfate, soit du bicarbonate de sodium. Bien que cette technique permette d'accroître très sensiblement la stabilité des particules de composés peroxygénés, celle-ci reste cependant inférieure à celle des particules de perborate de sodium tétrahydraté.

Il est également connu, par la demande de brevet FR-A-2 255 255 (DEUTSCHE GOLD- UND SILBERSCHEIDEANSTALT), d'augmenter le diamètre moyen des particules du percarbonate de sodium par incorporation de polymères hydroxycarboxylés particuliers obtenus par copolymérisation d'acroléine et d'acide acrylique suivie d'une réaction de Cannizzaro. Cette technique ne permet cependant pas d'améliorer la stabilité du produit.

La préssente invention a pour but de procurer des particules de composés peroxygénés qui ne présentent pas les inconvénients des produits connus, et qui sont particulièrement stables au stockage en atmosphère humide ou en présence des autres constituants usuels des poudres de lavage ou de blachiment. Ces particules présentent en outre une bonne résistance à l'attrition et au mottage, une bonne vitesse de dissolution dans l'eau, une teneur en fines faible et une bonne coulabilité. De plus, elles ont une teneur en oxygène actif proche de la teneur théorique. Enfin, elles présentent l'avantage d'avoir un poids spécifique apparent par écoulement libre plus faible que celui des particules obtenues selon les procédés antérieurs mentionnés ci-dessus.

La présente invention concerne à cet effet des particules de composés peroxygénés stabilisés au moyen de polymères hydroxycarboxylés contenant au moins 50% d'unités monomériques de formule

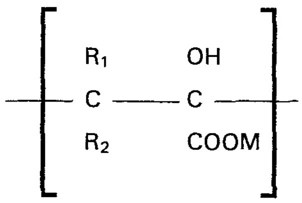

où $R_1$ et $R_2$ représentent l'hydrogène ou un groupement alkyle comprenant de 1 à 3 atomes de carbone et où M représente l'hydrogène, un atome de métal alcalin ou un atome de métal alcalino-terreux M-.

De préférence, on utilise des polymères pour lesquels M représente l'hydrogène ou un atome de métal alcalino-terreux M-.

De préférence, on utilise des polymères pour lesquels $R_1$ et $R_2$ représentent un atome d'hydrogène ou un groupement méthyle, $R_1$ et $R_2$ pouvant être identiques ou différents. Les meilleurs résultats sont obtenus avec les polymères où $R_1$ et $R_2$ représentent l'hydrogène.

Les polymères sont choisis parmi les homo- ou copolymères contenant des unités telles que définies ci-dessus, du même type ou de plusieurs types différents. Lorsqu'on utilise des copolymères, on les choisit parmi ceux qui contiennent au moins 50% d'unités telles que définies ci-dessus et, de préférence parmi ceux qui contiennent au moins 65% de pareilles unités. Les meilleurs résultats sont obtenus avec les polymères qui ne contiennent que des unités telles que définies ci-dessus.

Parmi les copolymères utilisables, figurent ceux qui contiennent des unités dérivées de monomères vinyliques substitués par des groupements choisis parmi les groupements hydroxyles et carboxyles. Avantageusement, ces copolymères contiennent des unités acryliques de formule

$$-[C(R_3)(R_4)-CH(COOM)]-$$

où $R_3$ et $R_4$ représentent un atome d'hydrogène ou un groupement alkyle comprenant de 1 à 3 atomes de carbone et où M a la même signification que ci-dessus. Parmi ces copolymères, on préfère utiliser ceux où $R_3$ et $R_4$ représentent l'hydrogène.

La masse moléculaire moyenne des polymères utilisés de préférence selon l'invention, déterminée au moyen de la relation de FLORY à partir de résultats combinés d'ultracentrifugation et de mesure de viscosité intrinsèque (L. Manderkern et P.J. Flory, J. Chem. Physics, 1952, *20*, p. 212-214), est supérieure à environ 300 et est comprise avantageusement entre 2000 et 1000000 et de préférence entre 5000 et 600000.

Les polymères utilisés peuvent avantageusement être mis en oeuvre sous forme des polylactones dérivées des polymères d'acide alpha-hydroxyacrylique contenant des unités monomériques de formule:

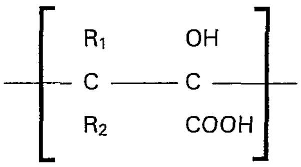

où $R_1$ et $R_2$ ont la même signification que ci-dessus.

Les polylactones utilisées de préférence selon l'invention sont des esters inter- et intra-moléculaires d'homo- ou de copolymères d'acides alpha-hydroxyacryliques. Dans ces polylactones, environ 30 à 100% et en général 40 à 100% des fonctions acides des unités monomériques alpha-hydroxyacryliques sont estérifiées par des fonctions alcools. La polylactone dérivée de l'acide poly-alpha-hydroxyacrylique non substitué a conduit à des très bons résultats.

Les polymères utilisés peuvent être également avantageusement être des sels de métaux alcalino-terreux, de préférence de calcium ou de magnésium, des polymères hydroxycarboxylés contenant des unités monomériques de formule

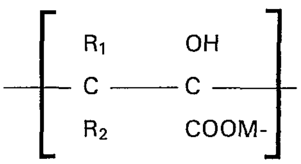

telles que définies ci-dessus et où M- représente un atome de métal alcalino-terreux.

Ils peuvent être mis en oeuvre directement sous forme des sels de métaux alcalino-terreux préformés des polymères, ou encore, de façon avantageuse, sous forme de leurs précurseurs tel que les polylactones correspondantes ou leurs sels de métaux alcalins d'une part, et des sels minéraux de métaux alcalino-terreux correspondants d'autre part. Dans ce cas, le sel minéral est mis en oeuvre en quantités comprises entre 0,1 et 10 fois la quantité stoechiométrique et, le plus souvent, en quantités voisines de la quantité stoechiométrique. Divers sels minéraux peuvent être utilisés à cet effet notamment des sels de l'acide correspondant au composé peroxygéné à stabiliser.

Ainsi dans le cas de la stabilisation du percarbonate, on peut mettre en oeuvre comme sel minéral un sel de métal alcalino-terreux de l'acide carbonique. Les mélanges de polylactone dérivée de l'acide poly-α-hydroxyacrylique avec du carbonate de calcium ou de magnésium ont conduit à de bons résultats.

On peut également mettre en oeuvre un sel soluble de métal alcalino-terreux tel qu'un halogénure plus particulièrement un chlorure. Dans ce cas, le sel de métal alcalino-terreux et le polymère hydroxycarboxylé, sous forme de polylactone ou de son sel de métal alcalin peuvent faire l'objet d'introductions distinctes.

Les polymères hydroxycarboxylés utilisés selon l'invention sont mis en oeuvre en quantités suffisantes pour permettre la stabilisation des composés peroxygénés. En général, la quantité de polymère hydroxycarboxylé présente dans les particules est supérieure à 0,01% de leur poids, de manière à assurer une stabilisation suffisante des composés peroxygénés. Habituellement, les teneurs en polymère hydroxycarboxylé ne dépassent pas 5% du poids des particules. Lorsque les teneurs sont supérieures, on observe un moins bon effet de stabilisation. De préférence, les teneurs en polymères hydroxycarboxylés ne dépassent pas 3% du poids des particules. De bons résultats ont été obtenus lorsque les quantités de polymère hydroxycarboxylé présentes dans les particules sont comprises entre 0,01 et 3% de leur poids. Les meilleurs résultats ont été obtenus avec des teneurs comprises entre 0,02 et 2,5%.

Les composés peroxygénés dont sont constituées les particules de l'invention peuvent être de natures diverses. En général, ce sont des persels de métaux alcalins, normalement peu stables. Parmi ceux-ci, les plus utilisés sont les percarbonates, les perpyrophosphates, les pertripolyphosphates, les persilicates et les peroxymonosulfates de métaux alcalins et plus particulièrement ceux de sodium et de potassium. Les particules de composés peroxygénés peuvent contenir un même type de persels ou un mélange de persels différents. L'invention s'est révélée intéressante dans le cas de particules de percabonate de sodium, de formule $Na_2CO_3.1,5H_2O_2$.

En général, les particules de l'invention sont constituées à raison d'au moins 80% et le plus souvent d'au moins 85% de leur poids de composés peroxygénés et de polymère hydroxycarboxylé. Elles peuvent contenir en outre de petites quantités d'autres additifs divers tels que des stabilisants habituels des composés peroxygénés ou leurs précurseurs ou encore des produits utilisés classiquement pour l'enrobage des particules de composés peroxygénés.

Les stabilisants autres que les polymères hydroxycarboxylés qui peuvent être incorporés aux particules de l'invention peuvent être de natures diverses. Parmi ceux-ci, figurent les silicates de métaux alcalins ou alcalino-terreux. Leur teneur ne dépasse en général pas 10% du poids des particules. Les agents d'enrobage peuvent également être de compositions variables. Ces agents d'enrobage peuvent être de nature organique ou inorganique. Des exemples d'agents d'enrobage sont donnés dans les brevets belges 805-812 déposé le 9 octobre 1973, 810 288 déposé le 29 janvier 1974, 810 289 déposé le 29 janvier 1974 et 813 645 déposé le 12 avril 1974, au nom de SOLVAY et Cie et les brevets belges 842 014 déposé le 20 mai 1976 et 862 620 déposé le 4 janvier 1978 au nom de la Demanderesse. En général, les agents d'enrobage de nature inorganique conviennent bien. Parmi ceux-ci figurent les carbonates, sulfates, silicates et bicarbonates de métaux alcalins ou alcalino-terreux. De bons résultats ont été obtenus en utilisant du carbonate de sodium seul

ou en mélange avec du sulfate de sodium et éventuellement du silicate de sodium. La teneur en agents d'enrobage ne dépasse en général pas 10% du poids des particules.

Les dimensions des particules de composé peroxygénés de l'invention peuvent varier dans d'assez larges limites. En général, les particules ont des dimensions voisines de celles des autres particules composant les poudres détergentes. Habituellement, elles ont des dimensions moyennes comprises entre 0,01 et 20 mm et le plus souvent entre 0,05 et 5 mm. Des particules dont au moins 80% ont un diamètre compris entre 0,1 et 1 mm conviennent bien. Ces particules peuvent éventuellement être agglomérées sous forme de granules ou de tablettes.

Les particules de l'invention ont en général un poids spécifique apparent par écoulement libre compris entre 0,4 et 1,4 kg/$dm^3$ et le plus souvent entre 0,5 et 1,3 kg/$dm^3$. Leur coulabilité, exprimée par le temps d'écoulement d'un poids de 250 g par l'orifice de 16 mm de diamètre d'un entonnoir pour analyse à tige courte, ne dépasse en général pas 10 secondes et leur indice d'usure mesuré selon le procédé décrit dans la norme ISO/TC 47/WG 11 (Secrétariat -86) 167 de la British Standards Insitution est en général inférieur à 10%.

Le poids spécifique apparent par écoulement libre, dont il est question ci-dessus, est déterminé par un procédé analogue à celui décrit aux A.S.T.M. Standards D 392-38 et B 212-48, préconisés respectivement pour la mesure du poids spécifique apparent des poudres à mouler et des poudres métalliques. L'appareillage utilisé est cependant légèrement différent. Il comporte une trémie tronconique dont la grande base a un diamètre de 53 mm et la petite base, munie d'un obturateur à ouverture totale, a un diamètre de 21 mm, la hauteur entre les bases étant de 58 mm et le volume utile d'environ 60 $cm^3$.

Le godet cylindrique d'un volume de 50 $cm^3$ a un diamètre intérieur de 37 mm et une hauteur égale à environ 46 mm. La base de la trémie est placée à 65 mm au-dessus du fond du godet. La mode opératoire est identique à celui décrit aux standards ASTM. On ferme l'obturateur de la trémie et on remplit celle-ci avec le produit à examiner et on arase au niveau du bord supérieur de la trémie à l'aide d'une lame rectiligne. On dispose le godet dans l'axe de la trémie et on ouvre l'obturateur. Après écoulement de la matière, on arase au niveau supérieur du godet. Le poids spécifique apparent par écoulement libre est égal au rapport entre le poids de matière dans le godet exprimé en kg et le volume du godet exprimé en $dm^3$.

La coulabilité du produit est caractérisée par le temps d'écoulement d'une quantité déterminée de produit par l'orifice de la tige d'un entonnoir calibré. Le procédé est sensiblement analogue à celui décrit au standard ASTM D 392-398.
L'appareil est constitué d'un entonnoir à clapet en acier inoxydable poli dont l'angle du cône est de 60°, le diamètre intérieur de 180 mm et la longueur de la tige de 165 mm. Le diamètre intérieur de la tige est de 16 mm. Le test consiste à introduire 250 g de ce produit dans l'entonnoir et à mesurer le temps d'écoulement après ouverture du clapet.

La résistance à la prise en masse du produit est mesurée par le test de mottage suivant. On remplit aux 2/3 un récipient en verre de 250 $cm^3$ pourvu d'un couvercle à visser au moyen du produit et on le place dans une étuve à 55°C pendant 24 h.

On observe ensuite la prise en masse du produit qui est évaluée selon l'échelle d'appréciation suivante:

10 le produit s'écoule librement comme du sable sec
9 le produit s'écoule facilement avec quelques hésitations
8 à 5 prise en masse partielle
4 à 1 prise en masse totale.

La présente invention concerne également un procédé pour la fabrication de particules de composés peroxygénés stabilisés qui consiste à introduire en continu une solution aqueuse contenant le précurseur du composé peroxygéné, dans un sécheur à lit fluide, à alimenter en continu le sécheur à lit fluide au moyen de germes dont les dimensions sont inférieures à celles des particules que l'on désire obtenir, et à évaporer en continu dans le sécheur l'eau présente dans lesdites solutions aqueuses, au moyen du gaz de fluidisation qui est introduit dans le sécheur à lit fluide et selon lequel on introduit simultanément dans le sécheur à lit fluide des polymères hydroxycarboxylés ou leurs précurseurs tels que définis ci-avant.

En général, les polymères hydroxycarboxylés sont mis en oeuvre sous forme des polylactones correspondantes ou sous forme de leurs précurseurs, d'une part les polylactones ou leurs sels de métaux alcalins et d'autre part les sels de métaux alcalino-terreux.

Le procédé de l'invention est particulièrement bien adapté à la fabrication de particules de percarbonate de sodium stabilisé. La description ci-après fait référence à cette fabrication particulière mais il est bien entendu que le procédé peut être appliqué à la fabrication d'autres persels au départ du sel correspondant et de peroxyde d'hydrogène.

La description ci-après fait référence à la mise en oeuvre de polylactones mais il est bien entendu que le procédé peut être appliqué à la mise en oeuvre d'autres polymères hydroxycarboxylés (ou de leurs précurseurs) tels que définis ci-avant. Lors de la mise en oeuvre de précurseurs, on peut introduire les précurseurs conjointement ou distinctement. Ainsi dans le cas de l'emploi de sels de métaux alcalino-terreux des polymères hydroxycarboxylés, on peut mettre en solution ou en suspension le sel de métal alcalino-terreux précurseur et le polymère précurseur dans la solution de peroxyde d'hydrogène. On peut également mettre en solution ou en suspension chacun des précurseurs dans respectivement la solution de peroxyde d'hydrogène et la solution de carbonate.

Les polylactones mises en oeuvre de préférence, sont en général introduites dans le lit fluide, soit en suspension (ou solution) dans une solution aqueuse, soit directement sous forme solide en mélange avec les germes alimentant le lit fluide, soit encore sous ces deux formes. La quantité de polylactones envoyée dans le lit fluide est en général comprise entre 0,03 et 15 g par 100 g de peroxyde d'hydrogène à 100% introduites dans le lit fluide. De bons résultats ont été obtenus lorsque la quantité de polylactones est comprise entre 0,3 et 9 g de polylactone par 100 g de peroxyde d'hydrogène à 100%. De bons résultats ont été obtenus lorsque la polylactone est introduite dans le lit fluide sous forme de suspension dans la solution aqueuse de peroxyde d'hydrogène.

Les solutions aqueuses contenant du peroxyde d'hydrogène peuvent contenir des quantités très variables de ce produit. On utilise avantageusement des solutions aqueuses contenant de 5 à 90% en poids de peroxyde d'hydrogène et de préférence de 15 à 70% en poids. Des concentrations inférieures sont peu intéressantes économiquement car la quantité d'eau à évaporer est alors très élevée. D'autre part, il est peu souhaitable d'utiliser des concentrations supérieures car les solutions sont dangereuses à manipuler.

Les solutions aqueuses contenant du carbonate de sodium peuvent contenir des quantités très variables de ce produit dans les limites de solubilité de ce dernier, ces limites étant bien entendu fonction de la température de la solution. En général, on utilise des solutions contenant plus de 5% en poids de carbonate de sodium et le plus souvent de 10 à 35% en poids de carbonate de sodium $Na_2CO_3$.

On peut également ajouter soit à la solution contenant le peroxyde d'hydrogène, soit à la solution contenant le carbonate de sodium, d'autres additifs comme par exemple des stabilisants habituels du percarbonate de sodium ou leurs précurseurs.

Le rapport molaire peroxyde d'hydrogène : carbonate de sodium utilisé, est en général voisin de 1,5. On utilise le plus souvent un rapport compris entre 1,3 et 1,7 et de préférence entre 1,4 et 1,6.

Les solutions de réactifs sont introduites simultanément dans le lit fluide, soit séparément par des gicleurs distincts, soit conjointement par un même gicleur, le prémélange s'effectuant à la sortie du gicleur. On peut prévoir plusieurs introductions de la ou des solutions réactionnelles. De préférence, celles-ci sont introduites dans la moitié inférieure de la couche fluidisée. Divers types d'appareils connus en eux-mêmes tels que des injecteurs pneumatiques, etc. peuvent être utilisés à cette fin.

La température des solutions peut varier dans d'assez larges limites. De préférence elle ne dépasse pas celle du lit fluidisé de façon à éviter les cristallisations intempestives dans les injecteurs lorsqu'on utilise des solutions concentrées. On utilise en général des températures comprises entre la température ambiante et 70°C et de préférence entre 20 et 50°C. Les températures des deux solutions ne doivent pas nécessairement être identiques.

La température du lit fluide est choisie de manière à ne pas dépasser la température de début de décomposition du percarbonate de sodium. Elle est en général copmprise entre la température ambiante et 100°C, habituellement entre 35 et 95°C et de préférence entre 45 et 85°C. La température de l'air ou autre gaz vecteur introduit au bas du lit fluidisé, par exemple au travers d'une toile ou d'une plaque de répartition, peut varier dans de grandes limites dépendant notamment de la température du lit que l'on désire maintenir, de la quantité d'eau à éliminer et dù débit du gaz vecteur. Elle est le plus souvent comprise entre 80 et 250°C et de préférence entre 100 et 200°C. D'autres températures peuvent cependant également convenir. Les températures supérieures sont généralement moins utilisées car elles peuvent occasionner des pertes de peroxyde d'hydrogène par évaporation ou par décomposition.

Le gaz vecteur peut être tout gaz inerte vis-à-vis des constituants du lit fluide. Habituellement, on utilise de l'azote, des gaz rares, de l'oxygène ou de l'air. L'air convient particulièrement bien. Le taux d'humidité du gaz vecteur recueilli à la sortie du lit fluide est en général maintenu à moins de 90% et de préférence à moins de 70% afin d'éviter le blocage du lit fluide.

Les germes utilisés peuvent avoir des dimensions variables. De toutes façons, leurs dimensions sont inférieures à celles des particules désirées. Par ailleurs, ils peuvent être de provenances diverses. Lors de la mise en route d'une installation, on introduit dans le lit des germes qui sont de préférence de petites particules de percarbonate de sodium obtenues soit au départ d'une autre installation, soit par voie humide. Des particules d'autres persels inorganiques tels que le perborate de sodium monohydraté, le perborate de sodium tétrahydraté, les persilicates, les persulfates ou des phosphates perhydratés peuvent également convenir car elles assurent également une répartition homogène de l'oxygène actif dans les particules obtenues.

En cours de fonctionnement, la présence dans le lit fluide de germes de dimensions inférieures à celle des particules que l'on désire obtenir est également indispensable. En général, les germes sont, au moins en partie, consitués du percarbonate de sodium fin produit normalement dans le lit. On peut également augmenter la proportion de germes en introduisant volontairement dans le lit des granules de percarbonate de sodium fins ou en détruisant mécaniquement au sein du lit même une partie des granules déjà formés ou encore en utilisant simultanément ces deux procédés.

Les particules de percarbonate de sodium fines que l'on peut introduire dans le lit proviennent dans ce cas du refus de la production après broyage, en dehors du lit fluidisé, des granules trop gros percarbonate de sodium dans le sécheur, du recyclage des fines entraînées hors du lit par le gaz de fluidisation, de la fabrication selon un autre procédé et du broyage éventuel de particules de percarbonate de sodium ou simultanément de plusiers de ces possibilités.

On peut également équiper le sécheur en lit fluidisé d'un ou de plusieurs dispositifs tels que des broyeurs, des agitateurs ou des racleurs qui détruisent mécaniquement les agglomérats et provoquent simultanément la formation de germes. Ces dispositifs permettent également d'éviter le tassement et la prise en masse du lit. Dans les lits fluides de grandes dimensions, ces dispositifs sont toutefois peu utilisés car on n'y observe pas la formation d'agglomérats. Dans ce cas on préfère en général introduire dans le lit fluide du percarbonate de sodium de recyclage ou de refus lorsqu'on désire augmenter la proportion de germes dans le lit. La technique utilisée de préférence pour augmenter la proportion de germes dans le lit consiste à recycler les fines entraînées hors du lit par le gaz de fluidisation.

Le procédé de l'invention peut être réalisé en continu ou en discontinu. Le sécheur à lit fluidisé peut être de forme cylindrique, cylindroconique, parallélépipédique ou de toute autre forme permettant l'application du procédé.

L'alimentation en produit solide peut se faire de toute manière connue; par exemple au moyen d'un système Venturi. La charge solide a en général un diamètre moyen des particules inférieur à 0,5 mm, le plus souvent compris entre 0,01 et 0,45 mm. Il est bien entendu que ces valeurs ne sont données qu'à titre d'exemple et que l'on peut utiliser des particules de dimensions différentes.

La sortie des particules peut se faire par tout dispositif connu, par exemple par élutriation par le fond du sécheur ou par une tubulure latérale disposé au bas du sécheur ou par débordement par une tubulure latérale, cette tubulure déterminant alors la hauteur du lit fluidisé.

Les gaz issus du lit fluide passent au travers d'un séparateur de fines tel que par exemple un cyclone. Les gaz extraits peuvent être envoyés à l'atmosphère ou éventuellement recyclés en lit fluide, partiellement ou totalement après élimination de la vapeur d'eau qu'ils contiennent, par séchage ou condensation. Les dimensions des particules obtenues dépendent notamment de la quantité de germes présents dans le lit, la grosseur des particules étant inversément proportionelle à la quantité de particules de percarbonate de sodium fines introduites volontairement dans le lit et au taux d'utilisation des dispositifs de destruction mécanique des grains (broyeurs . . .) éventuellement placés dans le lit.

Les dimensions des particules dépendent également de la pression du gaz dans le ou les injecteurs permettant d'introduire les solutions dans le lit fluide, la grosseur des particules étant inversement proportionnelle à la pression.

Le réglage de la dimension des particules à la valeur désirée peut donc aisément se faire en faisant varier la proportion de germes dans le lit soit par introduction de germes soit par destruction interne des particules ou en faisant varier la pression dans les injecteurs ou encore en utilisant simultanément ces deux procédés.

Les particules de percarbonate de sodium obtenues selon le procédé de l'invention peuvent avantageusement être enrobées au moyen d'agents d'enrobage connus en eux-même. Ceux-ci peuvent être de type organique ou inorganique comme indiqué ci-avant.

Cet enrobage peut se faire selon toute technique connue en elle-même. Les techniques en lit fluide telles que décrites par exemple dans le brevet belge 842 014 déposé le 20 mai 1976 au nom de la Demanderesse se sont révélées très avantageuses à utiliser.

Le procédé selon l'invention peut avantageusement être réalisé dans des appareillages tels que ceux représentés aux figures 1 et 2 en annexe qui représentent des manières différentes de réaliser le procédé suivant l'invention.

La figure 1 représente un sécheur à lit fluide de particules 1 fluidisé au moyen d'un gaz tel que l'air qui entre dans le système par la voie 2 après avoir été préchauffé dans un préchauffeur 3 alimenté en air par la voie 23 et dont la température est contrôlée au moyen d'un régulateur 4. L'air chaud passe dans la boîte à vent 5, traverse la grille 6 et pénètre dans le lit fluide 1 surmonté d'une zone 7 permettant de renvoyer une partie des fines au lit fluide. La grille 6 est percée au centre d'un trou 15 qui permet le passage de l'axe d'un racleur à lames rigides 16. Une tubulure 24 permet l'introduction d'un broyeur dans le fond du lit.

Les gaz issus du lit fluide passent par la voie 8 dans un collecteur de fines ou cyclone 9 et quittent l'appareil par le ventilateur 10. Les fines sont récupérées en 11.

Les germes constitués notamment par la totalité des fines récupérées en 11, sont envoyés, via un couloir vibrant 12, dans le lit fluide par la tubulure 13' à l'aide d'un Venturi 13 alimenté en air comprimé par la voie 14. L'alimentation en polylactone solide peut se faire également par cette voie. Selon une variante non représentée, les fines collectées en 9 peuvent être directement envoyées dans la tubulure 13'.

La solution contenant le peroxyde d'hydrogène quitte par la voie 18 le réservoir thermostatique de stockage 17 maintenu à la température voulue et la solution contenant le carbonate de sodium quitte par la voie 25 le résevoir thermistatique de stockage 26 également maintenu à la température voulue, les deux température pouvant être identiques ou différentes. Un mélangeur 28 permet d'homogénéiser la suspension de polylactone dans la solution aqueuse de peroxyde d'hydrogène lorsque la polylactone est introduite sous cette forme dans le lit fluide. Les deux solutions sont mélangées et pulverisées dans le lit fluide à l'aide d'un gicleur 19, alimenté en air comprimé par la voie 20, l'air étant réchauffé en 21.

Le produit granulé est recueilli soit débordement par la voie 22, soie par élutriation par la voie 27.

La figure 2 représente un appareillage similaire à celui représenté à la figure 1 dans lequel le gicleur unique est remplacé par deux gicleurs et dans lequel on n'a pas prévu de prélèvement par elutriation par la bas du réacteur.

La solution contenant du peroxyde d'hydrogène quitte par la voie 18 le réservoir thermostatique de stockage 17 maintenu à la température voulue et est pulvérisée dans le lit fluide à l'aide d'un gicleur 19a, alimenté en air comprimé par la voie 20a, l'air étant réchauffé en 21a.

La solution contenant du carbonate de sodium quitte par la voie 25 le réservoir thermostatique de stockage 26 maintenu à la température voulue et est pulvérisée dans le lit fluide à l'aide d'un gicleur 19b, alimenté en air comprimé par la voie 20b, l'air étant réchauffé en 21b.

Les autres caractéristiques de l'appareil sont identiques à celles de l'appareil représenté à la figure 1.

La présente invention concerne encore l'utilisation des particules de composé peroxygénés stabilisés dans des compositions ayant une action de blanchiment, telles que des compositions pour le lavage, le

trempage, le nettoyage, le blanchiment, le lavage de la vaisselle et le détachage.

Les compositions ayant une action de blanchiment contiennent en général:

- de 0,1 à 90% en poids de particules de composés peroxygénés stabilisés selon l'invention
— de 0 à 50% en poids d'agents tensioactifs cationiques, anioniques ou non-ioniques tels que ceux cités dans le livre «Surface Active Agents» de A.M. Schwartz et J.W. Perry Interscience Publ. Inc. N.Y., 1949 ou dans le brevet Etats-Unis 3 159 581
— de 0 à 50% en poids d'un ou plusieurs «builders» connus tels que des polyphosphates, des polymères carboxylés, le nitrilotriacétate de sodium et des sels de l'acide éthylène diaminetétraacétique
— de 0 à 20% en poids d'additifs divers tels que notamment des enzymes, des azurants optiques, des agents d'antiredéposition des salissures, des régulateurs de pH, des activateurs de persels, des colorants, des parfums, des inhibiteurs de corrosion, des inhibiteurs de ternissement et des désinfectants.

Les procédé de lavage, nettoyage, trempage ou blanchiment mettant en oeuvre de telles compositions sont en général réalisés à des températures de 10 à 130°C et lesdites compositions y sont mises en oeuvre à raison de 0,5 à 20 g/l de bain aqueux.

Afin d'illustrer l'invention, sans pour autant en limiter la portée, on donne ci-après des exemples de fabrication de particules de percarbonate de sodium stabilisé et des exemples mettant en évidence les propriétés de ces particules.

*Exemples 1 à 14*

Les essais repris ci-dessous ont été réalisés en continu dans un appareil du même type que celui représenté à la figure 1. Le sécheur à section cylindrique utilisé comporte deux tronçons de diamètres différents. Le tronçon inférieur a un diamètre de 152 mm et une hauteur au-dessus de la grille de répartition de l'air de 915 mm tandis que le tronçon supérieur a un diamètre de 305 mm et une hauteur de 300 mm.

La sortie des particules s'effectue par débordement par une tubulure latérale 22 située à 600 mm de la grille de répartition.

Le lit de particules est fluidisé par introduction au travers de la plaque de répartition des gaz d'un courant d'air chauffé. La température de la couche fluidisée est de 343°K. Initialement, le sécheur contient des particules de percarbonate de sodium non stabilisé. Le diamètre moyen de cette charge est d'environ 0,35 mm.

Le sécheur est alimenté en continu en solution aqueuse de peroxyde d'hydrogène dont la température est de 298°K et en solution aqueuse de carbonate de sodium dont la température est de 313°K, par un gicleur plongeant au sein du lit fluide. Les compositions de la solution aqueuse de peroxyde d'hydrogène et de la solution aqueuse de carbonate de sodium ainsi que les conditions opératoires en régime sont reprises an Tableau I ci-après.

L'essai 1 a été réalisé à titre de comparaison; il concerne un mode de fabrication du percarbonate de sodium sans le stabilisant selon l'invention. Cet essai a été réalisé dans un appareil du même type que celui présenté à la figure 1. Les autres essais ont été réalisés selon l'invention.

TABLEAU I

| Exemple | | 1 | 2 | 3 | 4 | 5 | 6 | 7 | 8 | 9 | 10 |
|---|---|---|---|---|---|---|---|---|---|---|---|
| Air de fluidisation | | | | | | | | | | | |
| – température | K | 493 | 476 | 463 | 483 | 485 | 487 | 470 | 473 | 483 | 483 |
| – débit | $m^3/h$* | 50 | 56 | 60 | 58 | 58 | 58 | 58 | 58 | 59 | 59 |
| Charge initiale du lit | kg | 4 | 3,5 | 3,5 | 3,5 | 3,5 | 3,5 | 3,5 | 3,5 | 3,5 | 3,5 |
| Alimentation des gicleurs | | | | | | | | | | | |
| – Air | | | | | | | | | | | |
| – débit | $m^3/h$* | 7 | 6,1 | 6,1 | 6,1 | 6,0 | 6,0 | 5,9 | 6,1 | 6,1 | 6,5 |
| – température | K | 328 | 331 | 343 | 343 | 343 | 343 | 318 | 343 | 343 | 343 |
| – pression absolue | $10^{-5}$ Pa | 2,7 | 2,5 | 2,5 | 2,5 | 2,5 | 2,5 | 2,5 | 2,5 | 2,5 | 2,8 |
| – Solution de peroxyde d'hydrogène | | | | | | | | | | | |
| – débit | kg/h | 1,500 | 1,600 | 1,340 | 1,700 | 1,680 | 1,700 | 1,420 | 1,360 | 1,735 | 1,71 |
| – concentration en $H_2O_2$ | % poids | 28,5 | 27,9 | 29,6 | 28,4 | 28,1 | 27,8 | 26,7 | 28,5 | 28,5 | 28,1 |
| » en $MgSO_4 \cdot 7H_2O$ | % poids | 0,85 | 0,8 | 0,8 | 0,85 | 0,85 | 0,84 | 0,8 | 0,8 | 0,85 | 0,85 |
| » en polylactone de l'acide poly-α-hydroxyacrylique | % poids | – | – | – | 0,47 | 0,74 | 1,32 | – | – | – | – |
| » en poly-α-hydroxyacrylate de Mg | % poids | | | | | | | | | 0,98 | – |
| » en poly-α-hydroxyacrylate de Ca | % poids | | | | | | | | | – | 0,98 |
| – Solution de carbonate de sodium | | | | | | | | | | | |
| – débit | kg/h | 3,000 | 3,207 | 2,725 | 3,425 | 3,410 | 3,400 | 2,690 | 2,755 | 3,38 | 3,45 |
| – température | K | 313 | 313 | 313 | 313 | 313 | 313 | 313 | 313 | 313 | 313 |
| – concentration en $Na_2CO_3$ | % poids | 30,0 | 29,5 | 29,6 | 29,7 | 29,4 | 29,4 | 29,5 | 29,4 | 28,2 | 29,7 |
| » en $SiO_2$ | % poids | 0,32 | 0,32 | 0,32 | 0,32 | 0,32 | 0,32 | 0,32 | 0,32 | 0,31 | 0,32 |
| » en poly-α-hydroxyacrylate de Na | % poids | – | 0,9 | – | – | – | – | – | – | – | 0,3 |
| » en $Na_6(PO_3)_6$ | % poids | 0,3 | 0,3 | 0,3 | 0,3 | 0,3 | 0,3 | 0,3 | 0,3 | 0,3 | 0,3 |
| Rapport molaire à l'introduction $H_2O_2/Na_2CO_3$ | | 1,48 | 1,47 | 1,52 | 1,50 | 1,48 | 1,48 | 1,50 | 1,47 | 1,55 | 1,51 |
| Introduction du stabilisant dans les fines recyclées | | | | | | | | | | | |
| – poly-α-hydroxyacrylate Na | g/h | – | – | 28 | – | – | – | – | – | – | – |
| – polylactone de l'acide poly-α-hydroxyacrylique | g/h | – | – | – | – | – | – | 12 | 27 | – | – |
| Production | kg/h et $m^2$ de lit | 62,7 | 78,5 | 67,8 | 78,5 | 75,7 | 79,1 | 62,1 | 67,8 | 89 | 78,7 |
| Rendement en $H_2O_2$ | % | 96 | 96 | 94 | 97 | 98 | 96 | 94 | 94 | 90 | 97 |

* mesuré dans les conditions normales de température et de pression

TABLEAU Ibis

| Exemple | | 11 | 12 | 13 | 14 |
|---|---|---|---|---|---|
| Air de fluidisation | | | | | |
| — température | K | 473 | 483 | 470 | 471 |
| — débit | $m^3/h$* | 59 | 59 | 58 | 56 |
| Charge initiale du lit | kg | 3,5 | 3,5 | 3,5 | 3,5 |
| Alimentation des gicleurs | | | | | |
| — Air | | | | | |
| — débit | $m^3/h$* | 7,5 | 7,5 | 8,5 | 7,0 |
| — température | K | 327 | 329 | 327 | 327 |
| — pression absolue | $10^{-5}$ Pa | 2,5 | 2,5 | 2,75 | 2,75 |
| — Solution de peroxyde d'hydrogène | | | | | |
| — débit | kg/h | 1,65 | 1,80 | 1,57 | 1,56 |
| — concentration en $H_2O_2$ | % poids | 29,7 | 29,6 | 28,0 | 27,7 |
| » en $MgSO_4 \cdot 7H_2O$ | % poids | 0,85 | 0,85 | — | |
| » en polylactone de l'acide poly-α-hydroxyacrylique | % poids | 0,64 | 2,1 | | |
| » en poly-α-hydroxy-acrylate de Mg | % poids | | | | |
| » en poly-α-hydroxy-acrylate de Ca | % poids | | | | |
| » en $CaCO_3$ | % poids | 2,4 | | | |
| » en $MgCO_3$ | % poids | | 1,9 | | |
| » en $CaCl_2$ | % poids | | | 0,69 | |
| » en $MgCl_2$ | % poids | | | 0,35 | 0,92 |
| — Solution de carbonate de sodium | | | | | |
| — débit | kg/h | 3,40 | 3,83 | 3,24 | 3,25 |
| — température | K | 313 | 313 | 313 | 313 |
| — concentration en $Na_2CO_3$ | % poids | 29,6 | 29,6 | 28,1 | 28,1 |
| » en $SiO_2$ | % poids | 0,31 | 0,31 | 0,28 | 0,28 |
| » en poly-α-hydroxy-acrylate de Na | % poids | | | 0,65 | 0,65 |
| » en $Na_6(PO_3)_6$ | % poids | 0,3 | 0,3 | 0,3 | 0,3 |
| Rapport molaire à l'introduction $H_2O_2/Na_2CO_3$ | | 1,51 | 1,50 | 1,52 | 1,47 |
| Introduction du stabilisant dans les fines recyclées | | | | | |
| — poly-α-hydroxyacrylate Na | g/h | | | | |
| — polylactone de l'acide poly-α-hydroxyacrylique | g/h | | | | |
| Production | kg/h et $m^2$ de lit | 69,5 | 84,4 | 62,8 | 63,0 |
| Rendement en $H_2O_2$ | % | 94 | 92 | 91 | 93 |

* mesuré dans les conditions normales de température et de pression

*Examen des produits*

Les différentes particules obtenues aux exemples 2 à 10 appelées respectivement produit 2 à produit 10 ont été comparées au produit obtenu à l'exemple 1 de comparaison appelé produit 1.

Les résultats sont rassemblés au Tableau II ci-après.

TABLEAU II

| Produit de l'exemple | Oxygène actif % en poids | Poids spécifique apparent, kg/dm³ |
|---|---|---|
| 1 | 14,3 | 1,19 |
| 2 | 14,0 | 1,13 |
| 3 | 14,1 | 1,14 |
| 4 | 14,4 | 1,16 |
| 5 | 14,4 | 1,13 |
| 6 | 14,0 | 1,08 |
| 7 | 14,1 | 1,18 |
| 8 | 14,0 | 1,12 |
| 9 | 14,3 | 1,15 |
| 10 | 14,3 | 1,19 |

*Stabilité des produits*

Ces essais ont pour but de mettre en évidence la stabilité des produits selon l'invention lors du stockage en présence des autres constituants d'une poudre à lessiver sans enzyme et de la comparer à celle du produit de référence 1 et du perborate de sodium tétrahydraté commercial.

On utilise des mélanges contenant 2% en poids d'oxygène actif soit 7 g de percarbonate de sodium (produit 1 à 14), soit 10 g de perborate de sodium tétrahydraté et 42 g de poudres commerciales dont les compostions sont données aux Tableaux III et IV respectivement.

TABLEAU III

Composition de la poudre détergente sans enzyme de type A

| Constituants | g/100 g |
|---|---|
| Carbonate de sodium | 1,8 |
| Silicate de sodium | 10,6 |
| Tripolyphosphate de sodium | 30,0 |
| Pyrophosphate de sodium | 8,1 |
| Sulfate de sodium | 13,3 |
| Ethylènediaminetétraacétate de sodium | 0,6 |
| Matières organiques tensioactives | 24,4 |
| — alkylarylsulfonate de sodium | |
| — condensat d'oxyde d'éthylène sur alcool gras | |
| — savon | |
| Eau et divers | 11,2 |

TABLEAU IV

Composition de la poudre détergente sans enzyme de type B

| Constituants | g/100 g |
|---|---|
| Silicate de sodium | 7,5 |
| Silicate de magnésium | 1,9 |
| Tripolyphosphate de sodium | 43,7 |
| Sulfate de sodium | 21,0 |
| Ethylènediaminetétraacétate de sodium | 0,3 |
| Carboxyméthylcellulose | 1,2 |
| Matières organiques tensioactives | 14,4 |
| — alkylarylsulfonate de sodium | |
| — condensat d'oxyde d'éthylène sur alcool gras | |
| — savon | |
| Eau et divers | 10,0 |

Après homogénéisation, on introduit les mélanges dans des boîtes en carton (11,5 × 7 × 2 cm) imprégnées de cire microcristalline (permeabilité 5 g $H_2O/m^2$.jour); les boîtes ainsi préparées sont alors stockées à 35°C en atmosphère de 80% d'humidité relative (HR) pendant 4, 8 et/ou 12 semaines.

Une autre série de boîtes recouvertes au recto et au verso d'un film d'acétate de cellulose (perméabilité 550 g $H_2O/m^2$.jour) sont également préparées et stockées à 28°C en atmosphère de 70% d'humidité relative (HR) pendant 4, 8 et/ou 12 semaines.

Après chaque durée de stockage, on dose l'oxygène actif de la poudre par titrage direct au $KMnO_4$ N/2 et on évalue la perte en oxygène par rapport à l'oxygène actif initial.

Les résultats des tests de conservation en présence des poudres de type A et B sont donnés respectivement aux Tableaux V et VI ci-après. Ils montrent la supériorité remarquable de l'invention par rapport aux particules de percarbonate de sodium ne contenant pas les stabilisants selon l'invention.

TABLEAU V

Particules non enrobées - Résultats des tests de conservation en boîtes en présence d'une poudre détergente sans enzyme de type A

| | Particules utilisées | | | 28°C 70% HR | | 35°C 80% HR | | |
|---|---|---|---|---|---|---|---|---|
| | Composé peroxygéné | Polymère hydroxycarboxylé | | % oxygène actif perdu après | | | | |
| | | nature | quantité* % | 8 sem. | 12 sem. | 4 sem. | 8 sem. | 12 sem. |
| | perborate de sodium tétrahydraté | | | 4 | 7 | 4 | 11 | 24 |
| 1 | percar-bonate Na | — | 0 | 26 | 36 | 30 | 54 | 73 |
| 2 | | poly-α-hydro-xyacrylate Na | 1,28 | | | 26 | 48 | 66 |
| 3 | | | 0,8 | 21 | 28 | 26 | 47 | 69 |
| 4 | | polylactone de l'acide poly-α-hydroxy-acrylique | 0,5 | 20 | 29 | 26 | 53 | 73 |
| 5 | | | 0,8 | 22 | 31 | 25 | 49 | 68 |
| 6 | | | 1,5 | 20 | 27 | 21 | 37 | 51 |
| 7 | | | 0,8 | | | 24 | 40 | 59 |
| 8 | | | 1,1 | 20 | 30 | 21 | 37 | 48 |

* exprimée en polylactone de l'acide poly-alpha-hydroxyacrylique

TABLEAU VI

Particules non enrobées - Résultats des tests de conservation en boîtes en présence d'une poudre détergente sans enzyme de type B

| | Particules utilisées | | | 28°C 70% HR | | 35°C 80% HR | | |
|---|---|---|---|---|---|---|---|---|
| | Composé peroxygéné | Polymère hydroxycarboxylé | | % oxygène actif perdu après | | | | |
| | | nature | quantité* % | 8 sem. | 12 sem. | 4 sem. | 8 sem. | 12 sem. |
| | Perborate Na tétrahydraté | | | 2 | 2 | 3 | 7 | 11 |
| 1 | percar-bonate Na | — | 0 | 15 | 23 | 17 | 35 | 51 |
| 6 | | polylactone de l'acide poly-α-hydroxyacrylique | 1,5 | 15 | 20 | | 31 | 42 |
| 9 | | poly-α-hydroxy-acrylate Mg | 0,47 | 16 | 20 | | 35 | 48 |
| 10 | | poly-α-hydroxy acrylate Ca | 0,14 | 16 | 23 | | 38 | 51 |

TABLEAU VI

Particules non enrobées - Résultats des tests de conservation en boîtes en présence d'une poudre détergente sans enzyme de type B

| | Particules utilisées | | | 28°C 70% HR | | 35°C 80% HR | | |
|---|---|---|---|---|---|---|---|---|
| | Composé peroxygéné | Polymère hydroxycarboxylé | | % oxygène actif perdu après | | | | |
| | | nature | quantité* % | 8 sem. | 12 sem. | 4 sem. | 8 sem. | 12 sem. |
| | Perborate Na tétrahydraté | | | 2 | 2 | 3 | 7 | 11 |
| 11 | | polylactone de l'acide poly-α-hydroxyacrylique<br>$CaCO_3$ | 0,56<br>1,15 | 11 | 17 | | 31 | 48 |
| 12 | | polylactone de l'acide poly-α-hydroxyacrylique<br>$MgCO_3$ | 1,81<br>1,63 | 8 | 13 | | 21 | 29 |
| 13 | | poly-α-hydroxy-acrylate de sodium<br>$CaCl_2$ | 0,99<br>0,80 | | | 10 | | |
| 14 | | poly-α-hydroxy-acrylate de sodium<br>$MgCl_2$ | 1,09<br>0,82 | | | 14 | 27 | |

* exprimée en polylactone de l'acide poly-alpha-hydroxyacrylique

*Exemples 15 à 28*

Les produits 1 à 14 obtenus lors de la réalisation des essais 1 à 14 ont enrobés en lit fluide au moyen d'un mélange de carbonate, de sulfate et de silicate de sodium.

L'enrobage est réalisé dans le même appareil que celui utilisé pour la fabrication du percarbonate de sodium selon les exemples 1 à 14.

Initialement, le lit contient une charge de 3 kg de produit 1 à 14 respectivement.

Le sécheur est alimenté en continu par une solution d'enrobant contenant 138,4 g/kg de carbonate de sodium et 61,6 g/kg de sulfate de sodium et 5,6 g/kg de verre soluble à 25% de $SiO_2$, en quantité telle que le produit enrobé contient 5% d'agent d'enrobage.

Le lit fluide est maintenu à une température de 333°K.

*Stabilité des produits*

La stabilité des produits enrobés a été examinée en présence de trois poudres commerciales différentes: de type A et de type B dont les compositions sont données aux tableaux III et IV ci-avant et de type C dont la composition est donnée au Tableau VII.

Les essais en présence des poudres de types A et B ont été réalisé dans les mêmes conditions que pour les produits obtenus selon les exemples 1 à 14.

Les essais en présence de la poudre de type C ont été réalisés dans des conditions différentes dans des boîtes en carton imprégnées de cire microcristalline. Ces boîtes ont été remplies au moyen d'un mélange contenant 2,5% en poids d'oxygène actif, soit environ 13 g de percarbonate de sodium ou 18 g de perborate de sodium, et 55 g de poudre de type C. Ces boîtes ont été conservées le jour à 35°C et 80% d'humidité (HR) et la nuit à 24°C et 90% d'humidité relative (HR).

TABLEAU VII

Composition de la poudre de blanchiment de type C

| Constituants | g/100 g |
|---|---|
| Carbonate de sodium | 21,3 |
| Silicate de sodium | 16,3 |
| Tripolyphosphate de sodium | 9,5 |
| Pyrophosphate de sodium | 3,9 |
| Orthophosphate de sodium | 1,0 |
| Sulfate de sodium | 29,9 |
| Chlorure de sodium | 9,7 |
| Matières organiques | 1,4 |
| Eau et divers | 7,0 |

Les résultats obtenus en présence des poudres de types A, B et C sont repris respectivement aux Tableaux VIII, IX et X.

TABLEAU VIII

Particules enrobées - Résultats de tests de conservation en boîtes en présence d'une poudre détergente sans enzyme de type A

| | Particules utilisées | | | 28°C 70% HR | 35°C 80% HR |
|---|---|---|---|---|---|
| | Composé peroxygéné | Composé hydroxycarboxylé | | % oxygène actif perdu après | |
| | | nature | quantité* | 12 sem. | 12 sem. |
| | perborate de sodium tétrahydraté | | | 7 | 24 |
| 15 | percarbonate Na | — | 0 | 21 | 31 |
| 16<br>17 | | poly-α-hydroxy-acrylate Na | 0,8 | 10 | 26 |
| 18 | | polylactone de l'acide poly-α-hydroxy acrylique | 0,5 | 8 | 27 |
| 19 | | | 0,8 | 11 | 26 |
| 20 | | | 1,5 | 13 | 19 |
| 21 | | | 0,8 | 17 | 22 |
| 22 | | | 1,1 | 17 | 25 |

* exprimée en polylactone de l'acide poly-alpha-hydroxyacrylique

TABLEAU IX

Particules enrobées - Résultats des tests de conservation en boîtes en présence d'une poudre détergente sans enzyme de type B

| Particules usilisées | | | | 28°C 70% HR | | | 35°C 80% HR | | |
|---|---|---|---|---|---|---|---|---|---|
| | Composé peroxygéné | Polymère hydroxycarboxylé | | % oxygène actif perdu après | | | | | |
| | | nature | quantité* % | 4 sem. | 8 sem. | 12 sem. | 4 sem. | 8 sem. | 12 sem. |
| | perborate de sodium tetrahydraté | | | 0 | 2 | 2 | 3 | 7 | 11 |
| 15 | percarbonate Na | – | 0 | 4 | 9 | 11 | 11 | 28 | 42 |
| 18 | percarbonate Na | polylactone de l'acide poly-α-hydroxyacrylique | 0,5 | 3 | 7 | 10 | 10 | 22 | 32 |
| 20 | percarbonate Na | polylactone de l'acide poly-α-hydroxyacrylique | 1,5 | | | | 9 | 13 | 33 |
| 23 | percarbonate Na | poly-α-hydroxy-acrylate Mg | 0,47 | 1 | 5 | 8 | 6 | 15 | 24 |
| 24 | percarbonate Na | poly-α-hydroxy-acrylate Ca | 0,14 | 3 | 5 | 7 | 7 | 16 | 31 |
| 25 | percarbonate Na | polylactone de l'acide poly-α-hydroxyacrylique<br>$CaCO_3$ | 0,56<br>1,15 | 4 | 5 | 6 | 6 | 8 | 16 |
| 26 | percarbonate Na | polylactone de l'acide poly-α-hydroxyacrylique<br>$MgCO_3$ | 1,81<br>1,63 | 0 | 2 | 5 | 3 | 7 | 11 |
| 27 | percarbonate Na | poly-α-hydroxy-acrylate de sodium<br>$CaCl_2$ | 0,99<br>0,80 | | | | 4 | | |
| 28 | percarbonate Na | poly-α-hydroxy-acrylate de sodium<br>$MgCl_2$ | 1,09<br>0,82 | | | | 5 | 14 | |

* exprimée en polylactone de l'acide poly-alpha-hydroxyacrylique

TABLEAU X

Particules enrobées - Résultats des tests de conservation en boîtes en présence d'une poudre de blanchiment de type C

| | Particules utilisées | | | Jour 35 °C, 80% HR Nuit 24 °C, 90% HR | | |
|---|---|---|---|---|---|---|
| | Composé peroxygène | Polymère hydroxycarboxylé | | % oxygène actif perdu après | | |
| | | nature | quantité % | 4 sem. | 8 sem. | 12 sem. |
| | perborate de sodium tetrahydraté | | | 2 | 4 | 10 |
| 15 | percarbo- | — | 0 | 10 | 29 | 36 |
| 18 | nate Na | polylactone de | 0,5 | 10 | 21 | 28 |
| 20 | | l'acide poly-α-hydroxyacrylique | 1,5 | 8 | 14 | 23 |

**Revendications**

1. Particules de composés peroxygénés stabilisés au moyen de polymères hydroxycarboxylés caractérisées en ce que les polymères hydroxycarboxylés contiennent au moins 50% d'unités monomériques de formule:

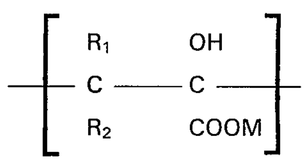

où $R_1$ et $R_2$ représentent l'hydrogène ou un groupement alkyle comprenant de 1 à 3 atomes de carbone et où M représente l'hydrogène, un atome de métal alcalin ou un atome de métal alcalino-terreux M-.

2. Particules selon la revendication 1, caractérisée en ce les polymères hydroxycarboxylés ne contiennent que des unités monomériques de formule:

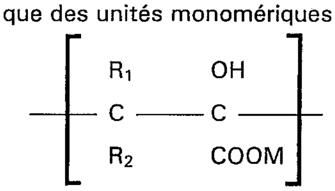

3. Particules selon la revendication 1 ou 2, caractérisée en ce que les polymères hydroxycarboxylés sont mis en oeuvre sous forme de polylactones dérivées des polymères d'acide alpha-hydroxyacrylique contenant des unités monomériques des formule:

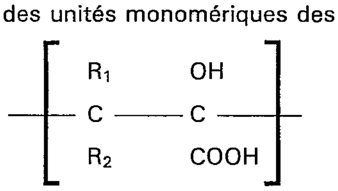

4. Particules selon la revendication 1 ou 2, caractérisée en ce que M représente un atome de métal alcalino-terreux M-.

5. Particules selon la revendication 4, caractérisée en ce qu'elles sont stabilisées par mise en oeuvre d'un sel de métal alcalino-terreux et d'un polymère choisi parmi les polylactones dérivées des polymères d'acide alpha-hydroxyacrylique contenant des unités monomériques de formule:

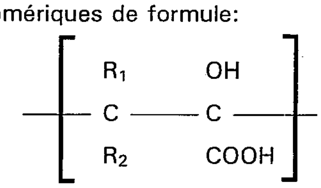

et leurs sels de métaux alcalins.

6. Particules selon la revendication 5, caractérisée en ce que le sel de métal alcalino-terreux est un sel de l'acide correspondant au composé peroxygéné à stabiliser ou un halogénure.

7. Particules selon l'une quelconque des revendications 1 à 6, caractérisée en ce que $R_1$ et $R_2$ représentent l'hydrogène.

8. Particules selon l'une quelconque des revendications 1 à 7, caractérisée en ce qu'elles contiennent de 0,01 à 5% en poids de polymères hydroxycarboxylés.

9. Particules selon l'une quelconque des revendications 1 à 8, caractérisée en ce que le composé peroxygéné est choisi parmi les persels de métaux alcalins normalement peu stables.

10. Particules selon la revendication 9, caractérisée en ce que le composé peroxygéné est le percabonate de sodium.

11. Particules selon l'une quelconque des revendications 1 à 10, caractérisée en ce qu'elles sont enrobées d'un agent d'enrobage inorganique.

12. Particules selon la revendication 11, caractérisée en ce qu'elles sont enrobées d'un agent d'enrobage contenant du carbonate de sodium ou un mélange de carbonate et de sulfate de sodium ou un mélange de carbonate, de sulfate et de silicate de sodium.

13. Procédé pour la fabrication de particules de composés peroxygénés stabilisés selon l'une quelconque des revendications 1 à 12 selon lequel on introduit en continu une solution aqueuse contenant du peroxyde d'hydrogène et une solution aqueuse contenant le précurseur du composé peroxygéné, dans un sécheur à lit fluide, on alimente en continu le sécheur à lit fluide au moyen de germes dont les dimensions sont inférieures à celles des particules que l'on désire obtenir, et on évapore en continu dans le sécheur l'eau présente dans lesdites solutions aqueuses au moyen du gaz de fluidisation caractérisé en ce que l'on introduit simultanément dans le sécheur à lit fluide les polymères hydroxycarboxylés ou leurs précurseurs.

14. Procédé selon la revendication 13, caractérisé en ce que les polymères hydroxycarboxylés sont mis en oeuvre sous forme des polylactones solides correspondantes.

15. Procédé selon la revendication 14, caractérisé en ce que les polylactones sont mises en oeuvre sous forme de suspension dans la solution aqueuse de peroxyde d'hydrogène.

16. Compositions à action de blanchiment caractérisées en ce qu'elles contiennent des particules de composés peroxygénés stabilisés selon l'une quelconque des revendications 1 à 12.

**Patentansprüche**

1. Teilchen von peroxidischen Verbindungen, die mit Hydroxycarboxylpolymeren stabilisiert sind, dadurch gekennzeichnet, dass die Hydroxycarboxylpolymeren wenigstens 50% Monomereinheiten der Formel:

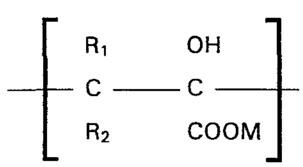

enthalten, worin $R_1$ und $R_2$ Wasserstoff oder eine 1 bis 3 Kohlenstoffatome aufweisende Alkylgruppe bedeuten und M für Wasserstoff, ein Alkalimetallatom oder ein Erdalkalimetallatom M- steht.

2. Teilchen nach Anspruch 1, dadurch gekennzeichnet, dass die Hydroxycarboxylpolymeren nur Monomereinheiten der Formel:

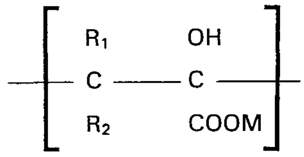

enthalten

3. Teilchen nach Anspruch 1 oder 2, dadurch gekennzeichnet, dass die Hydroxycarboxylpolymeren in Form von Polylactonen eingesetzt werden, die von Polymeren der α-Hydroxyacrylsäure mit einem Gehalt an Monomereinheiten der Formel:

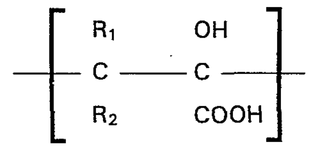

abgeleitet sind.

4. Teilchen nach Anspruch 1 oder 2, dadurch gekennzeichnet, dass M ein erdalkalimetallatom M- darstellt.

5. Teilchen nach Anspruch 4, dadurch gekennzeichnet, dass sie durch Einsatz eines Erdalkalimetallsalzes und eines Polymeren stabilisiert sind, das unter den Polylactonen ausgewählt ist, die von den Polymeren der α-Hydroxyacrylsäure mit einem Gehalt an Monomereinheiten der Formel:

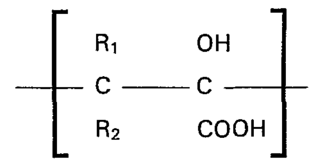

und deren Alkalimetallsalzen abgeleitet sind.

6. Teilchen nach Anspruch 5, dadurch gekennzeichnet, dass das Erdalkalimetallsalz ein Salz der Säure ist, die der zu stabilisierenden peroxidischen Verbindung entspricht, oder ein Halogenid.

7. Teilchen nach einem der Ansprüche 1 bis 6, dadurch gekennzeichnet, dass $R_1$ und $R_2$ Wasserstoff bedeuten.

8. Teilchen nach einem der Ansprüche 1 bis 7, dadurch gekennzeichnet, dass dass sie 0,01 bis 5 Gew.-% an Hydroxycarboxylpolymeren enthalten.

9. Teilchen nach einem der Ansprüche 1 bis 8, dadurch gekennzeichnet, dass die peroxidische Verbindung ausgewählt ist unter den normalerweise wenig stabilen Persalzen von Alkalimetallen.

10. Teilchen nach Anspruch 9, dadurch gekennzeichnet, dass die peroxidische Verbindung Natriumpercarbonat ist.

11. Teilchen nach einem der Ansprüche 1 bis 10, dadurch gekennzeichnet, dass sie mit einem anorganischen Überzugsmittel überzogen sind.

12. Teilchen nach Anspruch 11, dadurch gekennzeichnet, dass sie mit einem Überzugsmittel überzogen sind, das Natriumcarbonat oder ein Gemisch von Natriumcarbonat und -sulfat oder ein Gemisch von Natriumcarbonat, -sulfat und -silikat enthält.

13. Verfahren zur Herstellung der Teilchen aus stabilisierten peroxidischen Verbindungen nach einem der Ansprüche 1 bis 12, gemäss welchem man kontinuierlich eine wässerige, Wasserstoffperoxid enthaltende Lösung und eine wässerige, den Vorläufer der peroxidischen Verbindung enthaltende Lösung in einen Fliessbetttrockner einführt, kontinuierlich dem Fliessbetttrockner Keime zuführt, deren Abmessungen unter jenen der Teilchen liegen, die man herzustellen wünscht, und kontinuierlich in dem Trockner das in den genannten wässerigen Lösungen vorliegende Wasser mit Hilfe des Fluidisierungsgases verdampft, dadurch gekennzeichnet, dass man gleichzeitig in den Fliessbetttrockner die Hydroxycarboxylpolymeren oder deren Vorläufer einführt.

14. Verfahren nach Anspruch 13, dadurch gekennzeichnet, dass die Hydroxycarboxylpolymeren

in Form der entsprechenden festen Polylactone eingesetzt werden.

15. Verfahren nach Anspruch 14, dadurch gekennzeichnet, dass die Polylactone als Suspension in der wässerigen Wasserstoffperoxidlösung eingesetzt werden.

16. Bleichend wirkende Zusammensetzungen, dadurch gekennzeichnet, dass sie Teilchen aus stabilisierten peroxidischen Verbindungen gemäss einem der Ansprüche 1 bis 12 enthalten.

## Claims

1. Particles of peroxygenated compounds stabilised by means of polymers possessing hydroxyl groups and carboxyl groups, characterised in that the polymers possessing hydroxyl groups and carboxyl groups contain at least 50% of monomeric units of the formula:

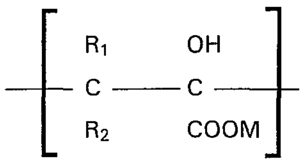

where $R_1$ and $R_2$ represent hydrogen or an alkyl group containing from 1 to 3 carbon atoms and where M represents hydrogen, an alkali metal atom or an alkaline earth metal atom M-.

2. Particles according to claim 1, characterised in that the polymers possessing hydroxyl groups and carboxyl groups contain only monomeric units of the formula:

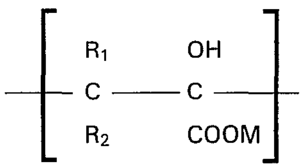

3. Particles according to claim 1 or 3, characterised in that the polymers possessing hydroxyl groups and carboxyl groups are employed in the form of polylactones derived from polymers of alpha-hydroxyacrylic acid containing monomeric units of the formula:

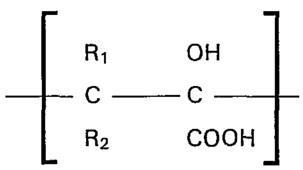

4. Particles according to claim 1 or 2, characterised in that M represents an alkaline earth metal atom M-.

5. Particles according to claim 4, characterised in that they are stabilised by employing an alkaline earth metal salt and a polymer chosen from amongst polylactones derived from polymers of alpha-hydroxyacrylic acid containing monomeric units of the formule:

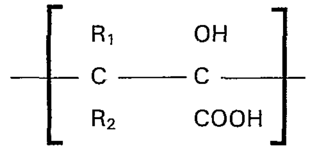

and their alkali metal salts.

6. Particles according to claim 5, characterised in that the alkaline earth metal salt is a salt of the acid corresponding to the peroxygenated compound to be stabilised, or a halide.

7. Particles according to any one of claims 1 to 6, characterised in that $R_1$ and $R_2$ represent hydrogen.

8. Particles according to any one of claims 1 to 7, characterised in that they contain from 0.01 to 5% by weight of polymers possessing hydroxyl groups and carboxyl groups.

9. Particles according to any one of claims 1 to 8, characterised in that the peroxygenated compound is chosen from amongst the normally relatively unstable persalts of alkali metals.

10. Particles according to claim 9, characterised in that the peroxygenated compound is sodium percarbonate.

11. Particles according to any one of claims 1 to 10, characterised in that they are coated with an inorganic coating agent.

12. Particles according to claim 11, characterised in that they are coated with a coating agent containing sodium carbonate or a mixture of sodium carbonate and sulphate or a mixture of sodium carbonate, sulphate and silicate.

13. Process for the manufacture of particles of stabilised peroxygenated compounds according to any one of claims 1 to 12, according to which an aqueous solution containing hydrogen peroxide and an aqueous solution containing the precursor of the peroxygenated compound are introduced continuously into a fluidised bed dryer, the fluidised bed dryer is fed continuously with seeds whose dimensions are less than those of the particles which it is desired to obtain, and the water present in the said aqueous solutions is evaporated continuously in the dryer by means of the fluidisation gas, characterised in that the polymers possessing hydroxyl groups and carboxyl groups, or their precursors, are introduced simultaneously into the fluidised bed dryer.

14. Process according to claim 13, characterised in that the polymers possessing hydroxyl groups and carboxyl groups are employed in the form of the corresponding solid polylactones.

15. Process according to claim 14, characterised in that the polylactones are employed in the form of a suspension in the aqueous solution of hydrogen peroxide.

16. Compositions possessing a bleaching action, characterised in that they contain particles of stabilised peroxygenated compounds according to any one of claims 1 to 12.

FIG 1

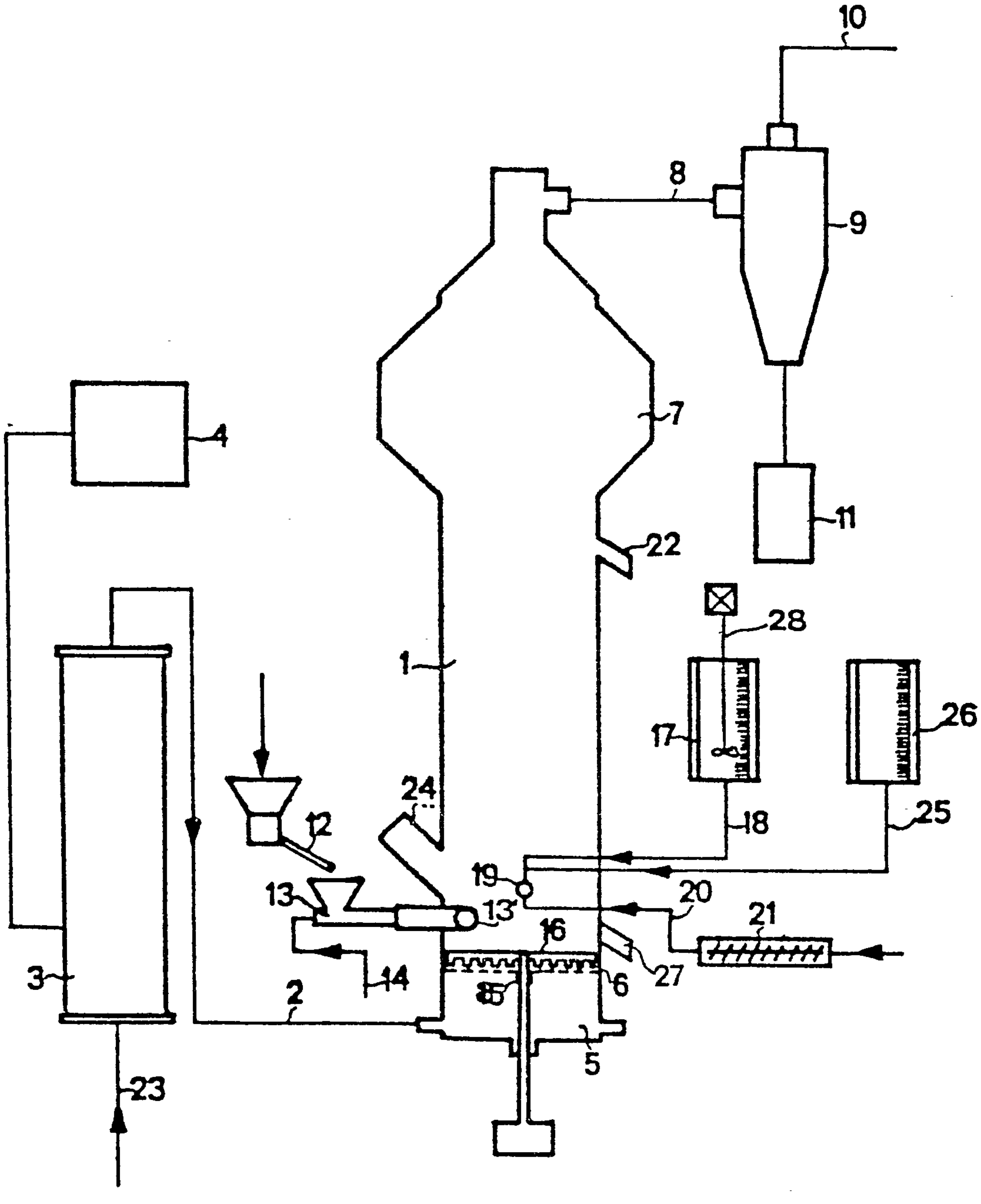
10
8
9
7
4
11
22
28
1
17
26
24
12
18
25
19
13
13'
20
21
16
27
14
3
8
15
6
2
5
23

FIG 2

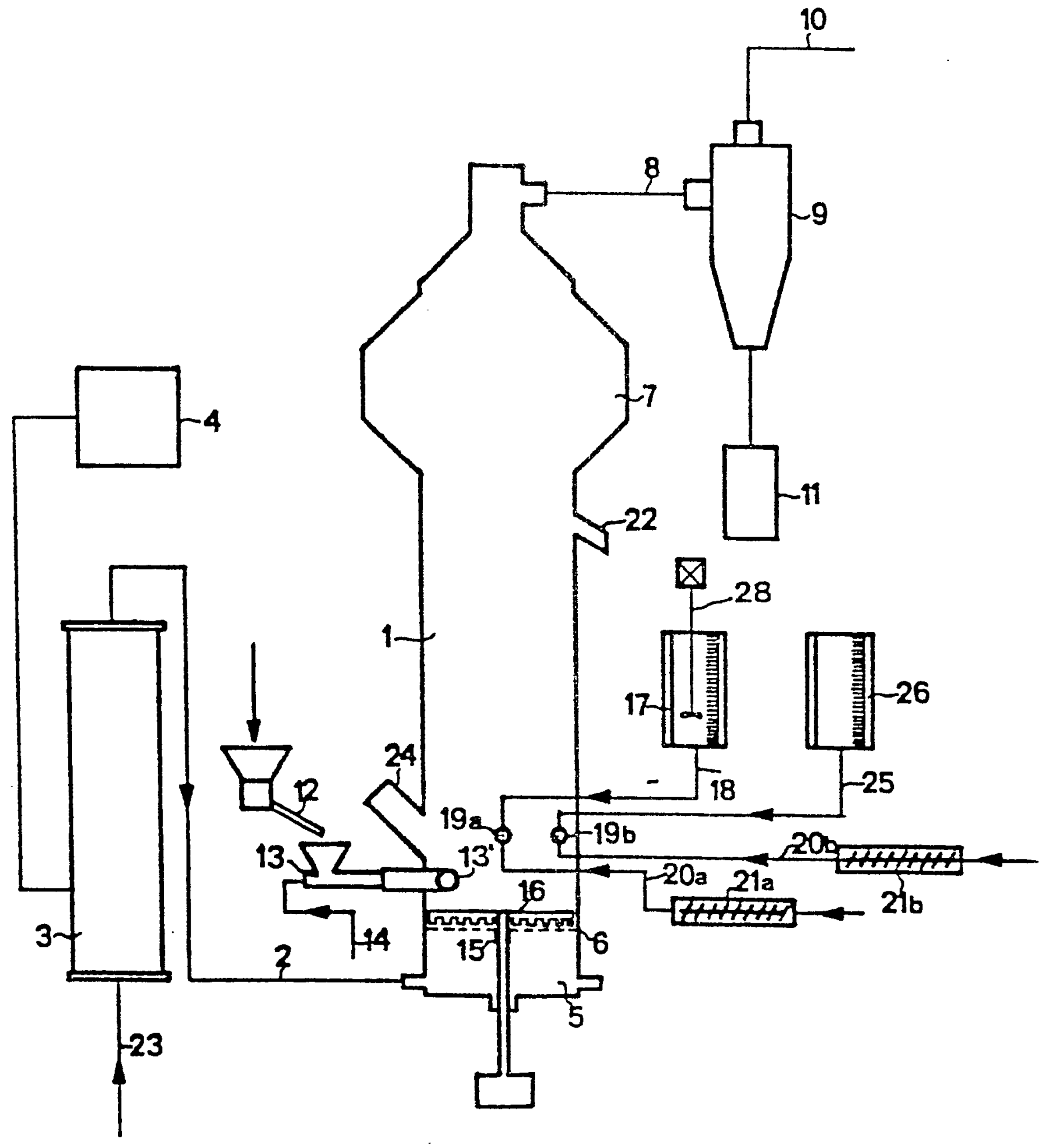
1
2
3
4
5
6
7
8
9
10
11
12
13
13'
14
15
16
17
18
19a
19b
20a
20b
21a
21b
22
23
24
25
26
28